# EUROPEAN PATENT SPECIFICATION

(11) **EP 3 625 372 B1**
(45) Date of publication and mention of the grant of the patent: **21.04.2021**
(21) Application number: 18731207.9
(22) Date of filing: 16.05.2018
(51) Int. Cl.: C14C 3/20, C08G 14/08, C08G 12/16

(54) **TANNING AGENT FOR LEATHER PRODUCTION COMPRISING A CONDENSATION POLY MER OF SULFONATED PHENOL, UREA, AND FORMALDEHYDE**
GERBMITTEL FÜR DIE LEDERHERSTELLUNG, BEINHALTEND EIN KONDENSATIONSPOLYMER AUF DER BASIS VON SULONIERTEM PHENOL, HARNSTOFF UND FORMALDEHYD
AGENT DE TANNAGE POUR LA FABRICATION DE CUIR COMPRENANT UN POLYMÈRE À BASE DE PHÉNOL SULFONÉ, URÉE ET FORMALDÉHYDE

(30) Priority: 17.05.2017 EP 17171584
(43) Date of publication of application: 25.03.2020
(73) Proprietor: Stahl International B.V., 5145 PE Waalwijk (NL)
(72) Inventor: AMMENN , Jochen, 69207 Sandhausen (DE); REUTER, Frank, 55278 Undenheim (DE)
(74) Representative: V.O.
(86) International application number: PCT/NL2018/050323
(87) International publication number: WO 2018/212651

(56) References cited:
- DE-A1- 10 140 551
- GB-A- 305 013
- US-A- 1 841 840
- DATABASE WPI Week 201537 Thomson Scientific, London, GB; AN 2015-29709H XP002782793, & CN 104 450 993 A (SHANGHAI JINSHI CHEM CO LTD) 25 March 2015 (2015-03-25)

## Description

The present invention relates to a condensation polymer of sulfonated phenol, urea, and formaldehyde, wherein sulfonated phenol contains ortho phenol sulfonic acid and para phenol sulfonic acid in a molar ratio of 2:1 to 1:5. The present invention also relates to a process for manufacturing the condensation polymer comprising the steps of a) providing a sulfonated phenol by contacting phenol and sulfuric acid at a temperature below 75 °C, b) contacting the sulfonated phenol with urea, and c) contacting the reaction product of step b) with formalde-hyde. The present invention also relates to a tanning agent for self-tanning, pre-tanning and co-tanning of unhaired hides and unhaired skins and for post-tanning of leather and pelts comprising water and the condensation polymer; and to a use of the condensation polymer for making leather.

Tanning is the process to crosslink collagen fibers from animal skin against bacterial or fungal degradation. Common tanning agents are chromium sulfate, glutaraldehyde, vegetable tanning agents, or synthetic tanning agents. Since the introduction of the first synthetic tanning agents (syntans) over one hundred years ago the role of syntans in the tanning process has changed significantly. Increasing technical requirements of leather quality could be achieved through modification of their chemistry. The first syntans were made by condensation of phenol sulfonic acid and formaldehyde. While these syntans were initially used as dispersers and auxiliaries for vegetable tannins, they could be applied as tanning agents without vegetable tannins after modification of their chemistry. With the wide acceptance of chromium sulfate or glutaraldehyde tanning, they are now mainly used in the re-tanning process, where they help to structure and fill the crosslinked collagen fibers.

To enhance the tanning performance of syntans un-sulfonated phenol was incorporated into the condensate. Usually, the ability to tan increases with lower degree of sulfonation, meaning the more un-sulfonated phenol is incorporated into the condensate the higher the ability to tan. There is a clear focus on para substituted phenol sulfonic acid as the central intermediate for these condensates in the art.

US 1841840, US 2179038, US 2242681, US 3852374 and US 5342916 describe the incorporation of urea into the condensation of para phenol sulfonic acid and formaldehyde.

In order to optimize more tanning properties and to achieve more softness on leathers made with these syntans, a subsequent condensation with phenol and formaldehyde is carried out. By application of this second phenol formaldehyde condensation the theory of Heidemann is applied in which un-sulfonated phenols increase the tanning properties. These heterogeneous condensates consisting of sulfonated and un-sulfonated phenols are referred to as replace-ments syntans. They show additional softness if applied on leather and have the ability to replace vegetable tannins in leather making, but unlike the primary condensate of para phenol sulfonic acid, urea, and formaldehyde lack lightfastness. Condensates of formaldehyde and urea with ortho-phenol sulfonic acid are described in DE1142173 in examples 8 to 10. They have not been isolated, but have been further reacted with phenol and formaldehyde in a second condensation to increase the performance.

However, the cited tanning agents suffer from a number of drawbacks. Leathers and skins produced therewith are not sufficiently light-fast and heat-resistant, i.e. they yellow readily and quickly lose their soft hand and their fullness and become brittle. The tanning agents them-selves show poor stability in storage and are sparingly soluble in water. For this reason, their tanning action is sometimes unsatisfactory. Object was to overcome the drawbacks of the state of the art.

The object was solved by a condensation polymer of sulfonated phenol, urea, and formalde-hyde, wherein sulfonated phenol contains ortho phenol sulfonic acid and para phenol sulfonic acid in a molar ratio of 2:1 to 1:5.

The molar ratio of ortho phenol sulfonic acid to para phenol sulfonic acid is preferably in the range from 1.4 : 1 to 1:3, in particular from 1:1 to 1:2. In another form the molar ratio of ortho phenol sulfonic acid to para phenol sulfonic acid is preferably in the range from 2:1 to 1:3, in particular from 2:1 to 1:2. The molar ratio of ortho phenol sulfonic acid to para phenol sulfonic acid may be determined by H-NMR.

The molar ratio of the sulfonated phenol to the urea is usually in the range of 2:1 to 1:2, pre-ferably in the range of 1.7 : 1 to 1 : 1.7, and in particular in the range of 1.3 : 1 to 1 : 1.3.

The molar ratio of the urea to the formaldehyde is usually in the range of 1:1 to 1:3, preferably in the range of 1.1 : 1 to 1 : 2.6, and in particular in the range of 1.3 : 1 to 1 : 2.2.

The formaldehyde is usually used in the form of a from 10 to 50% w/w strength aqueous solution; commercially, from 30 to 35% w/w strength aqueous solutions are available. Alternatively, use may be made of substances capable of eliminating formaldehyde under the conditions of the reaction, such as paraformaldehyde, whereas formaldehyde is preferred.

The condensation polymer of sulfonated phenol, urea, and formaldehyde is usually essentially free of other monomers. Preferably, the condensation polymer comprises less than 15 mol%, more preferably less than 10 mol%, and in particular less than 5 mol% of other monomers beside sulfonated phenol, urea, and formaldehyde.

In another form the condensation polymer of sulfonated phenol, urea, and formaldehyde is usually essentially free of phenol. Preferably, the condensation polymer comprises less than 15 mol%, more preferably less than 10 mol%, and in particular less than 5 mol% of phenol.

In another form the condensation polymer of sulfonated phenol, urea, and formaldehyde is usually essentially **free of other organic nitrogen bases** beside urea. Preferably, the condensation polymer comprises less than 10 mol%, more preferably less than 5 mol%, and in particular less than 1 mol% of other organic nitrogen bases beside urea. The other organic nitrogen bases beside urea may be selected from the group consisting of melamine, hydroxy-(C2-20 -alkyl)-melamine, bis-hydroxy-(C2-20 -alkyl)-melamine, tris-hydroxy (C2-20 -alkyl) melamine, hydroxyaryl melamine and poly(alkylene oxide)-substituted melamine, melem, hydroxy(C2-20 -alkyl)melem, poly(alkylene oxide) substituted melem, guanamine, N-hydro-xy(C2-20 -alkyl)guanamine, poly(alkylene oxide) substituted guanamine dicyanodiamide, and mixtures thereof.

The condensation polymer has usually a **molecular weight** in the range of 1000 to 8000 Dalton, preferably from 1500 to 5000 Dalton, in particular from 2500 to 3000 Dalton. The molecular weight may be determined by gel permeation chromatography, e.g. with an internal standard (such as an internal standard based on a polyacrylic acid).

The invention further relates to a **process for manufacturing** the condensation polymer comprising the steps of
a) providing a sulfonated phenol by contacting phenol and sulfuric acid at a temperature below 75 °C,
b) contacting the sulfonated phenol with urea, and
c) contacting the reaction product of step b) with formaldehyde.

The condensation polymer is usually obtainable by the process for manufacturing comprising the steps of
a) providing a sulfonated phenol by contacting phenol and sulfuric acid at a temperature below 75 °C,
b) contacting the sulfonated phenol with urea, and
c) contacting the reaction product of step b) with formaldehyde.

The process for manufacturing the condensation polymer may further comprise the step of d) neutralizing the reaction product of step c) to a pH of 4 to 9.

In **step a)** phenol and sulfuric acid are contacted preferably at a **temperature** below 65 °C, and in particular below 60 °C. In another preferred form of step a) phenol and sulfuric acid are contacted at a temperature from 20 to 60 °C, and in particular from 40 to 60 °C. In step a) phenol and sulfuric acid are contacted preferably at standard pressure.

Usually when contacting phenol and sulfuric acid heat is produced and the temperature rises typically to above 100 °C. In step a) the temperature is usually controlled by **cooling.** For cooling conventional cooling devices may be used, e.g. using heat exchangers, internal cooling coils, external vessel cooling.
In step a) the sulfuric acid is usually of 90-100 w/w, preferably 96-98 w/w strength sulfuric acid.

In step a) phenol and sulfuric acid are contacted at a molar ratio in the range of 1 to 1.5, prefer-ably in the range of 1.05 to 1.4.

In step a) phenol and sulfuric acid are contacted for 1 to 8 h, preferably from 2 to 4 h.

In step a) phenol and sulfuric acid are usually contacted until at least 80 mol%, preferably 85 mol%, and in particular at least 90 mol% of the phenol are sulfonated.

The reaction product of phenol and sulfuric acid may be used without further purifications steps for the subsequent step b).

In **step b)** the sulfonated phenol is contacted with **urea,** e.g. in the presence of water.

The molar ratio of the sulfonated phenol to the urea in step b) is usually in the range of 2:1 to 1:2, preferably in the range of 1.7 : 1 to 1 : 1.7, and in particular in the range of 1.3 : 1 to 1 : 1.3.

The contacting of the sulfonated phenol with urea is advantageously effected in acidic medium at pH's of from 0 to about 5, preferably from 0 to 2. The high hydrogen ion concentration is usually provided by excess sulfuric acid from the sulfonation step a) and/or by the dissociation of the sulfonation products from step a) in water. Setting specified values within the aforemen-tioned pH-range is effected using the usual acids and bases.

The reaction product of step b) may be used without further purifications steps for the subsequent step c).

In **step c)** the reaction product of step b) is contacted with **formaldehyde.**

The molar ratio of the urea to the formaldehyde of step c) is usually in the range of 1:1 to 1:3, preferably in the range of 1.1 : 1 to 1 : 2.6, and in particular in the range of 1.3 : 1 to 1 : 2.2.

The contacting of the reaction product of step b) with formaldehyde is advantageously effected at pH of from 0 to about 5, preferably from 0 to 3. The contacting of the reaction product of step b) with formaldehyde is advantageously effected at a temperature of from 40 to 90 °C, preferably from 50 to 80 °C, and in particular from 60 to 70 °C.

Typically, the reaction product of step c) is not contacted with additional phenol or with additional formaldehyde in a subsequent step.

The reaction product of step c) may be used without further purifications steps, e.g. for the optional subsequent step d).

In **step d)** the reaction product of step c) is usually neutralized to a pH of 4 to 9 (preferably to a pH of 5 to 8) by the addition of base, such as alkali or earth alkali hydroxides (e.g. NaOH).

The reaction product of step d) may be used without further purifications steps, e.g. as tanning agent.

The condensation polymer may be used either as an aqueous solution or in the form of spray-dried powders.

The present invention further relates to a **tanning agent** for self-tanning, pre-tanning and co-tanning of unhaired hides and unhaired skins and for post-tanning of leather and pelts comprising water and the condensation polymer as defined above or obtainable by the process as defined above.

The present invention further relates a **use** of the condensation polymer as defined above or obtainable by the process as defined above **for making leather.** Preferably, the condensation polymer is used as tanning agent, pre-tanning agent, or post-tanning agent for making leather.

Thus the condensation polymers of the invention may be used for **self-tannage and pretannage** of unhaired hides and unhaired skins in aqueous liquor. The procedure advantageously adopted is to treat the pickled unhaired hides, e.g., smoothed cattlehides having a skived thickness of from 1.5 to 4 mm, or unhaired skins, e.g., smoothed sheepskins, at a pH of from 2 to 7 and preferably from 2.5 to 4, and at a temperature of from 15 to 40 °C. and preferably from 20 to 35°C., over a period of from 3 to 20 h, with an aqueous solution of a condensation polymer of the invention. The treatment is carried out, for example, by fulling in a drum. The requisite amount of condensation polymers of the invention is normally, based on the weight of the unhaired hide, from 2 to 30% w/w and preferably from 5 to 25% w/w. The liquor ratio, i.e. the percentage liquor-to-goods ratio by weight, is usually from 30 to 200% in the case of unhaired hides and from 100 to 2000% in the case of unhaired skins, based, in each case, on the weight of the unhaired goods.

Following said treatment, the leather or pelt is usually adjusted to a pH of from 2 to 8 and preferably from 3 to 5, this being effected, for example, by the use of magnesium oxide, sodium carbonate, sodium bicarbonate or an organic acid such as formic acid or salts thereof, optionally treated with other tanning agents, and, if desired, dyed and stuffed toward the end, or following conclusion, of the tanning operation.

Furthermore, the condensation polymers of the invention may be used for **co-tannage** of unhaired hides and unhaired skins together with the tanning agents of the main tannage, e.g., a chrome or alum tannage. In this case, the working conditions with respect to pH, temperature, and duration of the treatment are adjusted to meet the requirements of the main components of the tannage, and the same applies to the processing equipment and the liquor ratio and also to the posttreatment. Here, the requisite amount of condensation polymers of the invention is, based on the weight of the unhaired hide, normally from 0.1 to 20% w/w and preferably from 0.5 to 15% w/w.

In addition, the condensation polymers of the invention may be used for the **post-tannage** of pretanned leathers and pelts, e.g., chrome leathers, in aqueous liquor. In this case the proce-dure adopted is usually to tan the pickled unhaired hides and skins, e.g. smoothed cattlehides having skived thicknesses of from 1.5 to 4 mm, with, for example, a conventional chrome tanning agent such as a chromium(III) salt, e.g., chromium(Ill) sulfate, in known manner, to de-acidify the resulting pretanned skins ("wetblues" in chrome tannage), and to follow up with a treatment, at a pH of from 2 to 7 and preferably from 2.5 to 4, and at temperatures of from 15 to 60 °C and preferably from 25 to 45 °C, over a period of from 1 to 12 h, with an aqueous solution of the condensation polymers of the invention. This treatment is carried out, for example, by fulling in a drum. The requisite amount of condensation polymers of the invention is normally, based on the skived weight of the leather, from 2 to 30% w/w and preferably from 5 to 25% w/w. The liquor ratio is usually from 30 to 200% in the case of unhaired hides and from 100 to 2000% in the case of unhaired skins, based, in each case, on the skived weight of the leather.

Following, and possibly prior to, if necessary, said treatment, the leather or pelt is usually adjusted to a pH of from 3 to 5, this being effect, for example, by the use of magnesium oxide or an organic acid such as formic acid or salts thereof, and, if desired, it is dyed and stuffed toward the end, or after conclusion, of the treatment.

The thus post-tanned leather or pelt may have been additionally treated with other tanning agents such as other polymeric tanning agents or syntans prior to post-tanning with the condensation polymers of the invention. Another possibility is to use the condensation polymers of the invention concurrently with such additional tanning agents, e.g., in the main tannage.

Suitable **additional** or concurrently used **tanning agents** are all usual agents having a tanning action on unhaired hides or unhaired skins. Specifically, the types of tanning agent which may be used are mineral tanning agents, e.g., salts of chromium, aluminum, titanium, and zirconium, synthetic tanning agents such as the aforementioned polymeric tanning agents and syntans, and vegetable tanning agents.

There are several **advantages** of the present invention:
The leathers and skins produced with the condensation polymers of the invention, especially pre-chrome-tanned leathers and skins, show an extremely high degree of fastness to light and heat resistance and are further distinguished by good fullness, high softness and firmness of grain.

Leathers and skins which have been produced using the condensation polymers of the invention by self-tannage or, for example, by post-tannage of chrome leather, are very easy to dye on account of their light color and are particularly suitable for the production of leathers of light shades.

The condensation polymers of the invention themselves have a sufficiently high tanning action, and they are adequately water-soluble and stable in storage.

One particular advantage of the condensation polymers of the invention is the fact that they possess only an extremely low residual content of toxic or healthhazardous unsulfonated monomeric phenols.

The following examples shall further illustrate the present invention.

### Examples

### Analytical method

In order to evaluate the ratio of para to ortho phenol sulfonic acid NMR analysis was applied of a sample taken at the end of the sulfonation reaction prior to formaldehyde condensation. This sample was quenched with water to terminate the reaction and neutralized with sodium hydro-xide solution. Water was evaporated and the remaining solid was analyzed by proton NMR in deuterated water with tetramethylsilan as an internal standard.

Ortho phenol sulfonic acid mono barium salt: 1H-NMR (400 MHz, D2O): 7.02 - 7.06 (m, 2H, 4-H, 6-H), 7.48 (t, J = 9 Hz, 1H, 5-H), 7.75 (d, J = 8 Hz, H, 3-H).

Para phenol sulfonic acid mono sodium salt: 1H-NMR (400 MHz, D2O): 6.96 (d, J = 9 Hz, 2H, 2-H, 6-H), 7.70 (d, J = 9 Hz, 2H, 3-H, 5-H).

In order to compare the ratios between ortho and para phenol sulfonic acid in mixtures the signals at 6.96 (dublett, para phenol-sulfonic-acid) and the multiplett from 7.02 - 7.06 (ortho phenol-sulfonic-acid) we correlated. Both signals represent two protons for the corresponding phenol sulfonic acids and showed separate sets of signals in mixtures.

### Example 1: Preparation of sulfonated phenol

148,5 g Phenol (1.58 mol) was treated at 25°C with 198,7 g H₂SO₄ (96%, 1.95 mol) within 45 minutes under stirring. Through cooling the temperature remained at 50°C. After 40% addition most of the phenol had melted and a suspension was formed that turned into a solution when the addition was 80% complete. The temperature was maintained at 50°C and kept for 120 minutes. In order to complete the reaction another 11 g H2SO4 (96%, 0.11 mol) were added.

A 1g sample was taken, quenched with water and neutralized with 50% concentrated sodium hydroxide solution. Water was evaporated from the sample and the remaining solid was analyzed via proton NMR. Analytical results of the sulfonation: 1H-NMR (400 MHz, D2O): 6.96 (d, J = 9 Hz, 2H, 2-H para, 6-H para), 7.02 - 7.06 (m, 2H, 4-H ortho , 6-H ortho), 7.48 (t, J = 9 Hz, 1H, 5-H ortho), 7.70 (d, J = 9 Hz, 2H, 3-H para, 5-H para). 7.75 (d, J = 8 Hz, 1H, 3-H ortho).

The ratios between integrals of ortho and para phenol sulfonic acid were compared. Therefore the signals at 6.96 (dublett, para phenol sulfonic acid) and the multiplett from 7.02 - 7.06 (ortho phenol sulfonic acid) we correlated. Both signals represent two protons for the corresponding phenol sulfonic acids and showed separate sets of signals in mixtures. The ratio for para to ortho was 1,6 : 1.

### Example 2: Condensation of sulfonated phenol, urea, and formaldehyde

102 g Urea (1,69 mol) and 102 g water were added to the product of Example 1 at 75 °C.

At 75°C 300.5 g formaldehyde as a 30% concentrated solution in water (3.00 mol) was added during 60 min dropwise. After complete addition 211 g NaOH as a 50% concentrated solution in water (2,64 mol) were added within 30 minutes followed by addition of 315 mL water. The pH reached 7.

The molecular weight of the reaction product was determined by gel permeation chromatography against an internal standard. Calibration was achieved with polyacrylates of defined molecular sizes. The M_{w} was about 89% of the size of the internal standard of 3000 Da, which means a M_{w} of about 2670 Dalton.

### Example 3: Preparation of sulfonated phenol (Comparative)

148,5 g Phenol (1.58 mol) was treated at 40°C with 198,7 g H₂SO₄ (96%, 1.95 mol) within 45 minutes under stirring. The temperature reached 105°C and was kept there for 1 h. In order to complete the reaction another 10 g H2SO4 (96%, 0,10 mol) were added.

A 1 g sample was taken, quenched with water and neutralized with 50% concentrated sodium hydroxide solution. Water was evaporated from the sample and the remaining solid was analysed via proton NMR. Analytical results of the sulfonation: 1H-NMR (400 MHz, D2O): 6.96 (d, J = 9 Hz, 2H, 2-H para, 6-H para), 7.02 - 7.06 (m, 2H, 4-H ortho , 6-H ortho), 7.48 (t, J = 9 Hz, 1H, 5-H ortho), 7.70 (d, J = 9 Hz, 2H, 3-H para, 5-H para). 7.75 (d, J = 8 Hz, 1H, 3-H ortho).

The ratios between integrals of ortho and para phenol sulfonic acid were compared. Therefore the signals at 6.96 (dublett, para phenol sulfonic acid) and the multiplett from 7.02 - 7.06 (ortho phenol sulfonic acid) we correlated. Both signals represent two protons for the corresponding phenol sulfonic acids and showed separate sets of signals in mixtures. The ratio for para to ortho was 36 : 1.

### Example 4: Condensation of sulfonated phenol, urea, and formaldehyde (Comparative)

102 g Urea (1.69 mol) and 102 g water amount of water were added. At 75°C 300,5 g form-aldehyde as a 30% concentrated solution in water (3.00 mol) was added during 60 min dropwise. After complete addition 211 g NaOH as a 50% concentrated solution in water (2.64 mol) were added within 30 minutes followed by addition of 315 mL water.
The pH reached 7.

The molecular weight of the reaction product was determined by gel permeation chromatography against an internal standard. Calibration was achieved with polyacrylates of defined molecular sizes. The M_{w} was about 92% of the size of the internal standard of 3000 Da, which means a M_{w} of about 2760 Dalton.

### Example 5 - Softness of leather

The sole tanning was carried out with bovine pickled pelt in a procedure published by Lollar and Tu (*JALCA* **1950** (45), 324-328). The softness was determined according to ISO 17235. Larger numbers indicate more softness. The results are summarized in Table 1.

Pelt tanned with 25 % condensation polymer of example 2 was significantly softer than pelt tanned with 25 % the condensation polymer of comparative example 4. The condensates had similar molecular weight according to gel permeation chromatography.

**Table 1:**

| | Ratio ortho : para | Softness |
|---|---|---|
| Example 2 | 1 (ortho) : 1,6 (para) | 2,7 |
| Example 4 (comparative) | 1 (ortho) : 36 (para) | 2,1 |

### Example 6 - Softness of leather

Re-tanning was carried out with wet blue, which is an intermediate in leather making deriving from the treatment of pickled pelt with 6-8 % chromium sulfate: in a 3,5 L tanning drum 100 g of water and 100 g of bovine wet blue of southern German origin with 1,7 mm strength were treated with 1,2 g sodium formiate and 0,3 g sodium bicarbonate for 90 minutes. The resulting float had a pH of 4,5. 8 g re-tanning agent (referring to the solid content) were added and turning of the tanning drum was continued for 90 minutes. The float was discharged and the leather washed with 200 g water. Afterwards the leather was dried via hang drying over night without vacuum at room temperature. Chromium tanned leathers were re-tanned with 8% (referring to the solid content) of examples 2, comparative example 4, or the replacement tanning agent.

The softness was determined according to ISO 17235. Larger numbers indicate more softness. The results are summarized in Table 2.

Leather re-tanned with example 2 was softer than leather re-tanned with comparative example 2.

**Table 2.**

| | Ratio ortho : para | Softness |
|---|---|---|
| Example 2 | 1 (ortho) : 1,6 (para) | 5,0 |
| Example 4 (comparative) | 1 (ortho) : 36 (para) | 4,9 |

### Example 7 - Lightfastness of leather

The two leathers from example 6 were exposed to light in a sun tester for 72 h according to ISO 105-B02 and the results are summarized in Table 3. Both leathers showed little yellowing meaning good lightfastness.

They were compared to a leather re-tanned wit 8% of a commercially available replacement syntan (a polycondensate of para phenolsulfonic acid, urea and formaldehyde plus second condensation with phenol and formaldehyde, the molecular weight was similar to the condensation polymer of Examples 2 and 4). This replacement synthan showed clearly worse lightfastness, and much higher values for residual phenol (cfr Table 3), determined by HPLC analytics (calibrated with commercially available phenol solutions with known concentrations in water).

**Table 3**

| | Lightfastness | Residual Phenol |
|---|---|---|
| example 2 | 2 (good) | < 10 ppm |
| example 4 (comparative) | 2 (good) | < 10 ppm |
| Replacement syntan (comparative) | 4 (insufficient) | 5000 ppm |

## Claims

1. A condensation polymer of sulfonated phenol, urea, and formaldehyde, wherein the sulfonated phenol contains ortho phenol sulfonic acid and para phenol sulfonic acid in a molar ratio of 2:1 to 1:5.

2. The condensation polymer according to claim 1 wherein the molar ratio of ortho phenol sulfonic acid to para phenol sulfonic acid is in the range from 2:1 to 1:3.

3. The condensation polymer according to claim 1 or 2 wherein the molar ratio of the sulfonated phenol to the urea is in the range of 2:1 to 1:2.

4. The condensation polymer according to any of claims 1 to 3 wherein the molar ratio of the urea to the formaldehyde is in the range of 1:1 to 1:3.

5. The condensation polymer according to any of claims 1 to 4 obtainable by a process comprising the steps of
a) providing a sulfonated phenol by contacting phenol and sulfuric acid at a temperature below 75 °C,
b) contacting the sulfonated phenol with urea,
c) contacting the reaction product of step b) with formaldehyde.

6. The condensation polymer according to claim 5 wherein in step a) the temperature is controlled by cooling.

7. A process for manufacturing the condensation polymer as defined in any of claims 1 to 4 comprising the steps of
a) providing a sulfonated phenol by contacting phenol and sulfuric acid at a temperature below 75 °C,
b) contacting the sulfonated phenol with urea, and
c) contacting the reaction product of step b) with formaldehyde.

8. The process according to claim 7 further comprising the step of d) neutralizing the reaction product of step c) to a pH of 4 to 9.

9. The process according to claim 7 or 8 wherein in step a) the temperature is controlled by cooling.

10. The process according to any of claims 7 to 9 wherein the reaction product of step c) is not contacted with additional phenol or with additional formaldehyde in a subsequent step.

11. The process according to any of claims 7 to 10 wherein the molar ratio of the sulfonated phenol to the urea is in the range of 2:1 to 1:2.

12. The process according to any of claims 7 to 11 wherein the molar ratio of the urea to the formaldehyde is in the range of 1:1 to 1:3.

13. A tanning agent for self-tanning, pre-tanning and co-tanning of unhaired hides and unhaired skins and for post-tanning of leather and pelts comprising water and the condensation polymer as defined in any of claims 1 to 6 or obtainable by the process as defined in any of claims 7 to 12.

14. A use of the condensation polymer as defined in any of claims 1 to 6 or obtainable by the process as defined in any of claims 7 to 12 for making leather.

15. The use according to claim 14 wherein the condensation polymer is used as tanning agent, pre-tanning agent, or post-tanning agent

## Patentansprüche

1. Kondensationspolymer aus sulfoniertem Phenol, Harnstoff und Formaldehyd, wobei das sulfonierte Phenol ortho-Phenolsulfonsäure und para-Phenolsulfonsäure in einem molaren Verhältnis von 2:1 bis 1:5 enthält.

2. Kondensationspolymer nach Anspruch 1, wobei das molare Verhältnis von ortho-Phenolsulfonsäure zu para-Phenolsulfonsäure im Bereich von 2:1 bis 1:3 liegt.

3. Kondensationspolymer nach Anspruch 1 oder 2, wobei das molare Verhältnis des sulfonierten Phenols zu dem Harnstoff im Bereich von 2:1 bis 1:2 liegt.

4. Kondensationspolymer nach einem der Ansprüche 1 bis 3, wobei das molare Verhältnis des Harnstoffs zum Formaldehyd im Bereich von 1:1 bis 1:3 liegt.

5. Kondensationspolymer nach einem der Ansprüche 1 bis 4, das durch ein Verfahren erhalten werden kann, das die Schritte umfasst
a) Bereitstellung eines sulfonierten Phenols durch Inkontaktbringen von Phenol und Schwefelsäure bei einer Temperatur unter 75 °C,
b) Inkontaktbringen des sulfonierten Phenols mit Harnstoff,
c) Inkontaktbringen des Reaktionsprodukts aus Schritt b) mit Formaldehyd.

6. Kondensationspolymer nach Anspruch 5, wobei in Schritt a) die Temperatur durch Kühlen gesteuert wird.

7. Verfahren zur Herstellung des in einem der Ansprüche 1 bis 4 definierten Kondensationspolymers, umfassend die Schritte
a) Bereitstellung eines sulfonierten Phenols durch Inkontaktbringen von Phenol und Schwefelsäure bei einer Temperatur unter 75 °C,
b) Inkontaktbringen des sulfonierten Phenols mit Harnstoff, und
c) Inkontaktbringen des Reaktionsprodukts aus Schritt b) mit Formaldehyd.

8. Verfahren nach Anspruch 7 ferner umfassend den Schritt
d) Neutralisieren des Reaktionsprodukts aus Schritt c) auf einen pH-Wert von 4 bis 9.

9. Verfahren nach Anspruch 7 oder 8, wobei in Schritt a) die Temperatur durch Kühlen geregelt wird.

10. Verfahren nach einem der Ansprüche 7 bis 9, wobei das Reaktionsprodukt aus Schritt c) in einem nachfolgenden Schritt nicht mit zusätzlichem Phenol oder mit zusätzlichem Formaldehyd in Kontakt gebracht wird.

11. Verfahren nach einem der Ansprüche 7 bis 10, wobei das molare Verhältnis des sulfonierten Phenols zu dem Harnstoff im Bereich von 2:1 bis 1:2 liegt.

12. Verfahren nach einem der Ansprüche 7 bis 11, wobei das molare Verhältnis des Harnstoffs zum Formaldehyd im Bereich von 1:1 bis 1:3 liegt.

13. Gerbstoff zum Selbstgerben, Vorgerben und Mitgerben von unbehaarten Häuten und unbehaarten Fellen und zum Nachgerben von Leder und Pelzen, der Wasser und das Kondensationspolymer nach einem der Ansprüche 1 bis 6 umfasst oder nach dem Verfahren nach einem der Ansprüche 7 bis 12 erhalten werden kann.

14. Verwendung des Kondensationspolymers nach einem der Ansprüche 1 bis 6 oder, das nach dem Verfahren nach einem der Ansprüche 7 bis 12 zur Herstellung von Leder erhalten werden kann.

15. Verwendung nach Anspruch 14, wobei das Kondensationspolymer als Gerbstoff, Vorgerbstoff oder Nachgerbstoff verwendet wird.

## Revendications

1. Un polymère de condensation de phénol sulfoné, d'urée et de formaldéhyde, dans lequel le phénol sulfoné contient de l'acide orthophénolsulfonique et de l'acide paraphénolsulfonique dans un rapport molaire de 2/1 à 1/5.

2. Le polymère de condensation selon la revendication 1 dans lequel le rapport molaire acide orthophénolsulfonique/acide paraphénolsulfonique se situe entre 2/1 et 1/3.

3. Le polymère de condensation selon la revendication 1 ou 2 dans lequel le rapport molaire phénol sulfoné/urée se situe entre 2/1 et 1/2.

4. Le polymère de condensation selon l'une quelconque des revendications 1 à 3 dans lequel le rapport molaire urée/formaldéhyde se situe entre 1/1 et 1/3.

5. Le polymère de condensation selon l'une quelconque des revendications 1 à 4 obtenu par un processus comprenant les étapes de
a) formation d'un phénol sulfoné par contact du phénol et de l'acide sulfurique à une température inférieure à 75 °C,
b) mise en contact du phénol sulfoné avec l'urée)
c) mise en contact du produit de la réaction de l'étape b) avec le formaldéhyde.

6. Le polymère de condensation selon la revendication 5, dans lequel, dans l'étape a), la température est contrôlée par refroidissement.

7. Un procédé de fabrication du polymère de condensation tel que défini dans l'une quelconque des revendications 1 à 4 comprenant les étapes suivantes
a) formation de phénol sulfoné par contact du phénol et de l'acide sulfurique à une température inférieure à 75 °C,
b) mise en contact du phénol sulfoné avec l'urée, et
c) mise en contact du produit de réaction de l'étape b) avec le formaldéhyde.

8. Le procédé selon la revendication 7 comprenant en outre l'étape de d) neutralisation du produit de réaction de l'étape c) à un pH de 4 à 9.

9. Le procédé selon la revendication 7 ou 8 dans lequel dans l'étape a) la température est contrôlée par refroidissement.

10. Le procédé selon l'une quelconque des revendications 7 à 9 dans lequel le produit de réaction de l'étape c) n'est pas mis en contact avec du phénol supplémentaire ou avec du formaldéhyde supplémentaire dans une étape ultérieure.

11. Le procédé selon l'une des revendications 7 à 10 dans lequel le rapport molaire phénol sulfoné/urée est procédé de 2/1 à 1/2.

12. Le procédé selon l'une des revendications 7 à 11 dans lequel le rapport molaire urée/formaldéhyde se situe entre 1/1 à 1/3.

13. Un agent de tannage pour l'auto-tannage, le pré-tannage et le co-tannage des peaux exemptes de poils et de cuirs exempts de poils et pour le post-tannage des cuirs et peaux, comprenant de l'eau et du polymère de condensation tel que défini dans l'une quelconque des revendications 1 à 6 ou obtenu par le procédé tel que défini dans l'une quelconque des revendications 7 à 12.

14. Une utilisation du polymère de condensation tel que défini dans l'une quelconque des revendications 1 à 6 ou obtenue par le procédé tel que défini dans l'une quelconque des revendications 7 à 12 pour la fabrication du cuir.

15. L'utilisation selon la revendication 14 dans laquelle le polymère de condensation est utilisé comme agent de tannage, agent de pré-tannage, ou agent de post-tannage.
